# EUROPÄISCHE PATENTSCHRIFT

(11) **EP 3 957 902 B1**
(45) Veröffentlichungstag und Bekanntmachung des Hinweises auf die Patenterteilung: **12.03.2025**
(21) Anmeldenummer: 21182389.3
(22) Anmeldetag: 29.06.2021
(51) Int. Cl.: F21S 41/141, F21S 41/151, F21S 41/153, F21S 41/663, B60Q 1/14

(54) **FAHRZEUGSCHEINWERFER MIT KOMPENSATION VON INHOMOGENITÄTEN IN DER LICHTVERTEILUNG**
VEHICLE HEADLAMP WITH COMPENSATION OF INHOMOGENEITIES IN LIGHT DISTRIBUTION
PHARES DE VÉHICULE À COMPENSATION DES INHOMOGÉNITÉS DANS LA RÉPARTITION DE LA LUMIÈRE

(30) Priorität: 20.08.2020 DE 102020210548
(43) Veröffentlichungstag der Anmeldung: 23.02.2022
(73) Patentinhaber: VOLKSWAGEN AG, 38440 Wolfsburg (DE)
(72) Erfinder: Roth, Joscha, 30177 Hannover (DE); Lampe, Sebastian, 49205 Hasbergen (DE)

(56) Entgegenhaltungen:
- DE-A1- 102007 008 994
- DE-A1- 102011 077 636
- DE-A1- 102012 103 293
- DE-A1- 102013 104 276
- DE-A1- 102014 009 592
- DE-A1- 102017 129 254
- DE-A1- 102017 205 768
- FR-A1- 3 040 936

## Beschreibung

Die vorliegende Erfindung bezieht sich auf ein Verfahren zum Betreiben einer Beleuchtungsvorrichtung, insbesondere eines Scheinwerfers, für ein (Straßen-)Fahrzeug sowie auf eine Beleuchtungsvorrichtung, insbesondere einen Scheinwerfer, für ein (Straßen-)Fahrzeug. Beleuchtungsvorrichtungen und Verfahren zum Betreiben dieser sind aus dem Stand der Technik seit längerem bekannt.

Üblicherweise setzen Beleuchtungsvorrichtungen zur Ausleuchtung der Fahrzeugumgebung mehrere Lichtfunktionen, wie beispielsweise eine Grundausleuchtung im Nahbereich, Fernlicht und Abblendlicht, um und werden hierzu in einem entsprechenden Betriebsmodus betrieben. Für die Realisierung der Grundausleuchtung im Nahbereich, der Fernlichtfunktion sowie der Abblendlichtfunktion kann jeweils ein separates Lichtmodul vorgesehen sein. Möglich ist aber auch, dass ein einziges Lichtmodul mehrere Lichtfunktionen realisieren kann, etwa eine Vorfeld- und eine Fernlichtverteilung. Ebenfalls bekannt sind Beleuchtungsvorrichtungen mit einem hochauflösenden Modul (HD-Modul), welches beispielsweise sowohl Abblendlichtfunktionen als auch Fernlichtfunktionen unterstützen kann und welches eine sehr hohe Anzahl an einzeln und unabhängig voneinander steuerbarer Lichtpixel erzeugen kann.

Für den Fernlichtbetrieb sind aus dem Stand der Technik sogenannte (LED-)Matrixscheinwerfer mit einem Matrix-Modul bekannt, welches eine Vielzahl von insbesondere in Zeilen und/oder Spalten angeordneter Lichtquellen (z.B. LEDs, d.h. lichtemittierende Dioden) aufweist, die einzeln und unabhängig voneinander in ihrer Leistung ansteuerbar sind. Dies bietet die Möglichkeit, jede einzelne Lichtquelle in ihrer Leistung zu dimmen oder vollständig zu deaktivieren und damit gezielt die Intensität des von ihr erzeugten Lichtsegments der resultierenden Fernlichtverteilung des gesamten Matrix-Moduls zu regulieren. Auf diese Weise lässt sich die Intensität der resultierende Fernlichtverteilung Lichtsegment-weise regulieren. Eingesetzt wird dies beispielsweise, um das Fernlicht in dem Bereich weiterer Verkehrsteilnehmer auszusparen.

Bei heutigen Matrixsystemen treten allerdings häufig Streifeneffekte auf, die vom Fahrer wahrgenommen und als störend empfunden werden können. Das streifige Erscheinungsbild kann sich bei den Matrixsystemen aus der Abbildung einzelner Lichtsegmente, die von den separaten Lichtquellen wie LEDs erzeugt werden, auf die Fahrbahn ergeben. Weiterhin kann sich in dem ausgeleuchteten Fahrbahnbereich eine dunkle Kante im Übergangsbereich zwischen Vorfeld und Matrix abzeichnen. Auch diese Inhomogenität in der Lichtverteilung kann als störend empfunden werden.

Aus der DE 10 2013 206 489 A1 ist eine Beleuchtungseinrichtung eines Kraftfahrzeugs mit einem Matrix-Fernlichtmodul zur Erzeugung einer Matrix-Lichtverteilung aus mehreren gleich breiten, streifenförmigen Lichtverteilungen bekannt. Inmitten der Matrix-Lichtverteilung wird eine möglichst homogene resultierende Gesamtlichtverteilung durch eine gleichmäßige Ausleuchtung der Lichtaustrittsflächen der individuellen Matrix-Lichtquellen und durch eine lückenlose Anordnung dieser aneinander erreicht. Zur Realisierung einer zum Rand in ihrer Lichtstärke abfallenden Seitenausleuchtung wird eine eigens hierfür vorgesehene, zusätzliche Lichtquelle mit mehrteiliger Primäroptik zur Erzeugung einer Nebenlichtverteilung vorgeschlagen, welche die Matrix-Lichtverteilung zur Seite hin ergänzt. Eine möglichst homogen ausgeleuchtete, resultierende Gesamtlichtverteilung wird in dem Übergangsbereich der Nebenlichtverteilung und der Matrix-Lichtverteilung durch eine lückenlose Anordnung einer Teil-Primäroptik der zusätzlichen Lichtquelle an eine Lichtaustrittsfläche der Matrix-Lichtquellen erreicht.

Aus der DE 10 2014 009 592 A1 ist eine Scheinwerfervorrichtung für ein Kraftfahrzeug mit einer Matrixscheinwerfereinheit bekannt, welche dazu geeignet ist, unterschiedliche Raumsegmente in einem Umgebungsbereich des Fahrzeugs auszuleuchten. Weiterhin ist eine Zusatzscheinwerfereinheit vorgesehen, um Inhomogenitäten des wellenförmigen Verlaufs des durch die Matrixscheinwerfereinheit ausgeleuchteten Bereichs zu verringen. Erreicht wird dies durch einen zusätzlichen Lichtkegel, welchen über den gesamten Bereich ausgestrahlt wird und mit dem wellenförmigen Bereich überlagert wird. Hierdurch wird ein geringerer Gradient zwischen den einzelnen Scheitelpunkten (Maxima, Minima) des wellenförmigen Ausleuchtungsprofils erreicht.

Aus der DE 10 2013 104 276 A1 ist ein Verfahren für die Anpassung wenigstens eines Ausleuchtparameters einer Ausleuchtvorrichtung in zumindest einem lokalen Ausleuchtabschnitt des Ausleuchtbereichs einer Lichtfunktion vor einem Fahrzeug bekannt, umfassend die folgenden Schritte: a) Überwachen eines Ist-Werts der Ausleuchtung in zumindest einem lokalen Ausleuchtabschnitt des Ausleuchtbereichs; b) Vergleich des Ist-Werts mit einem Soll-Wert für die Ausleuchtung in diesem zumindest einen lokalen Ausleuchtabschnitt; c) Anpassen wenigstens eines Ausleuchtparameters der Ausleuchtvorrichtung zur wenigstens teilweisen Kompensation eines Unterschieds zwischen dem Ist-Wert und dem Soll-Wert in diesem zumindest einen lokalen Ausleuchtabschnitt.

Aus der DE 10 2012 103 293 A1 ist ein Verfahren zum Betreiben eines Fahrzeugscheinwerfers eines Kraftfahrzeugs bekannt, nämlich zur Bestimmung einer von einer Auflösung des Fahrzeugscheinwerfer abhängigen Gesamtintensitätsverteilung für den Fahrzeugscheinwerfer und zur Ansteuerung des Fahrzeugscheinwerfers auf Grundlage der Gesamtintensitätsverteilung, wobei ein vor dem Kraftfahrzeug liegender, vom Fahrzeugscheinwerfer ausgeleuchteter Umgebungsbereich des Kraftfahrzeugs mit Hilfe eines Kamerasystems zumindest in der Auflösung des Fahrzeugscheinwerfers erfasst wird, wobei eine Ist-Gesamthelligkeitsverteilung für den vom Kamerasystem erfassten Umgebungsbereich ermittelt wird, wobei weiterhin in dem von dem Kamerasystem erfassten Umgebungsbereich selbstleuchtende Blendlichtquellen und/oder reflektierende Blendlichtquellen und deren Eigenschaften erfasst werden, wobei abhängig von der Ist-Gesamthelligkeitsverteilung und/oder abhängig von den erfassten Blendlichtquellen ein Gesamtadaptionsniveau von Augen eines Fahrers des Kraftfahrzeugs ermittelt wird, und wobei die Gesamtintensitätsverteilung abhängig vom Gesamtadaptionsniveau des Fahrers bestimmt wird.

Aus der DE 10 2017 205 768 A1 ist ein Scheinwerfersystem für ein Fahrzeug bekannt. Das Scheinwerfersystem umfasst mehrere Lichtquellen, einen bildaufnehmenden Sensor und eine Steuerungseinheit. Der bildaufnehmende Sensor ist dazu eingerichtet, eine Bildsequenz von einer äußeren Umgebung des Fahrzeugs aufzunehmen, wobei die Bildsequenz mehrere nacheinander aufgenommene einzelne Bilder umfasst, und in den einzelnen Bildern der Bildsequenz nach Raumwinkelbereichen getrennt jeweils wenigstens eine Lichtintensität zu ermitteln. Die Steuerungseinheit ist dazu eingerichtet, für wenigstens einen der Raumwinkelbereiche eine Soll-Lichtintensität festzulegen und basierend auf der festgelegten Soll-Lichtintensität und auf einer in einem ersten Bild der Bildsequenz in dem wenigstens einen Raumwinkelbereich gemessenen Lichtintensität eine von den Lichtquellen abgegebene Lichtmenge derart einzustellen, dass die Kamera in einem nachfolgenden zweiten Bild der Bildsequenz in dem wenigstens einen Raumwinkelbereich die festgelegte Soll-Lichtintensität ermittelt.

Aus der DE 10 2011 077 636 A1ist ein Lichtmodul eines Kraftfahrzeugs zur Erzeugung einer Spotverteilung einer Fern-Lichtverteilung bekannt, die durch eine Überlagerung der Spotverteilung und einer durch mindestens ein anderes Modul erzeugten Grundverteilung gebildet ist. Um ein voll funktionsfähiges, einfach und kostengünstig realisierbares Lichtmodul zur Realisierung einer Spotverteilung einer Fernlicht-Lichtverteilung zu schaffen, wird vorgeschlagen, dass das Lichtmodul mehrere streifenförmige Segmente der Spotverteilung erzeugen kann, wobei sich die streifenförmigen Segmente zu der Spotverteilung ergänzen.

Aus der FR 3 040 936 A1 ist eine Beleuchtungsvorrichtung für ein Kraftfahrzeug bekannt, umfassend mindestens eine erste Untervorrichtung für Streifenbeleuchtung, die konfiguriert ist, um einen ersten Lichtstrahl zu erzeugen, und eine zweite Untervorrichtung, die konfiguriert ist, um einen zweiten Lichtstrahl zu erzeugen, wobei das zweite Teilgerät eine Matrix von Mikrospiegeln umfasst, die so konfiguriert sind, dass sie einen Licht-Teilstrahl in Form von gepixelten Strahlen bilden und zumindest teilweise den zweiten Strahl ausbilden.

Aus der DE 10 2007 008 994 A1ist eine Leuchteinheit eines Fahrzeugscheinwerfers bekannt, welche eine Projektorlinse aufweist, die auf einer optischen Achse angeordnet ist, die in Richtung nach vorn und hinten des Fahrzeugs verläuft. Weiterhin weist diese ein erstes Lichtemitterelement auf, das an der Rückseite eines rückseitigen Brennpunkts der Projektorlinse angeordnet ist und einen Reflektor zum Reflektieren von Licht von dem ersten Lichtemitterelement zur Vorderseite in der Nähe der optischen Achse. Weiterhin sind in der Nähe einer rückseitigen Brennebene der Projektorlinse mehrere zweite Lichtemitterelemente zum Aussenden von Licht zur Projektorlinse vorgesehen.

Aus der DE 10 2017 129 254 A1 ist ein Fahrzeugscheinwerfer bekannt, umfassend zumindest zwei Lichtmodule, wobei ein erstes Lichtmodul eingerichtet ist, eine dynamisch steuerbare erste Teil-Lichtverteilung zu erzeugen. Das erste Lichtmodul umfasst zumindest eine erste Lichtquelle und zumindest ein erstes Mittel zum Erzeugen eines ersten Leuchtbildes aus der ersten TeilLichtverteilung und zumindest eine erste Projektionsoptik, wobei mittels der zumindest einen ersten Projektionsoptik das erste Leuchtbild als erstes Lichtbild in einer ersten Abstrahlrichtung auf die Straße projizierbar ist. Ein zweites Lichtmodul ist eingerichtet ist, eine dynamisch steuerbare zweite Teil-Lichtverteilung zu erzeugen. Das zweite Lichtmodul umfasst zumindest eine zweite Lichtquelle und zumindest ein zweites Mittel zum Erzeugen eines zweiten Leuchtbildes aus der zweiten Teil-Lichtverteilung und zumindest eine zweite Projektionsoptik, wobei mittels der zweiten Projektionsoptik als zweites Lichtbild in einer zweiten Abstrahlrichtung auf die Straße projizierbar ist. In einem eingebauten Zustand des Scheinwerfers in einem Fahrzeug verlaufen die erste Abstrahlrichtung des ersten Lichtbilds und die zweite Abstrahlrichtung des zweiten Lichtbilds annähernd parallel und es überlagern sich das erste Lichtbild und das zweite Lichtbild im Fernbereich vor dem Fahrzeug zumindest teilweise, wobei die erste Teil-Lichtverteilung eine erste Breite aufweist und die zweite Teil-Lichtverteilung eine zweite Breite aufweist, wobei die erste Breite größer ist als die zweite Breite, und/oder die erste Teil-Lichtverteilung eine erste Höhe aufweist und die zweite Teil-Lichtverteilung eine zweite Höhe aufweist, wobei die erste Höhe größer ist als die zweite Höhe.

Aus den Beleuchtungsvorrichtungen und dem Verfahren zum Betreiben dieser, die derzeit aus dem Stand der Technik bekannt sind, ergibt sich der Nachteil, dass sich in der resultierenden Gesamtlichtverteilung auftretende Inhomogenitäten in dem Übergangsbereich zweier Teil-Lichtverteilungen kaum oder nur vergleichsweise aufwändig durch eine (mechanische) Änderung der Form und/oder Ausrichtung eines optischen Elements kompensieren lassen.

Der vorliegenden Erfindung liegt die Aufgabe zugrunde, die aus dem Stand der Technik bekannten Nachteile zu überwinden und eine Beleuchtungsvorrichtung sowie ein Verfahren zum Betreiben dieser bereitzustellen, welches eine möglichst flexibel anpassbare Kompensation von Inhomogenitäten einer Gesamtlichtverteilung in möglichst hoher Auflösung und damit eine möglichst homogene Umgebungsausleuchtung erlaubt.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Betreiben einer Beleuchtungsvorrichtung, insbesondere eines Scheinwerfers, für ein (Straßen-)Fahrzeug, weist die Beleuchtungsvorrichtung eine Beleuchtungseinrichtung auf, mittels welcher die Beleuchtungsvorrichtung in einem Betriebsmodus einer vorgegebenen Lichtfunktion eine Gesamtlichtverteilung aus einer ersten Teillichtverteilung und wenigstens einer weiteren Teillichtverteilung erzeugt und/oder abstrahlt. Die Beleuchtungsvorrichtung kann mittels eines hochauflösenden Lichtmoduls eine hochaufgelöste Lichtverteilung erzeugen. Bevorzugt ist die Beleuchtungsvorrichtungen zur Ausleuchtung, insbesondere zur Frontbeleuchtung, der Fahrzeugumgebung geeignet und bestimmt.

Erfindungsgemäß erzeugt in dem Betriebsmodus der vorgegebenen Lichtfunktion das hochauflösende Lichtmodul eine hochaufgelöste Lichtverteilung, welche zumindest anteilig eine Kompensationslichtverteilung aufweist, mittels welcher (wenigstens) eine in der Gesamtlichtverteilung vorliegende Inhomogenität reduziert und/oder kompensiert wird. Bevorzugt stellt das hochauflösende Modul wenigstens einen Anteil ihrer erzeugten Lichtverteilung als Kompensationslichtverteilung zur Verfügung, der insbesondere in der Art eines Negativmusters wenigstens eine oder mehrere Inhomogenitäten der Gesamtlichtverteilung ausgleicht oder zumindest reduziert. Bevorzugt wird mittels der Kompensationslichtverteilung eine Vielzahl in der Gesamtlichtverteilung vorliegender Inhomogenitäten und besonders bevorzugt werden alle vorliegende Inhomogenitäten reduziert und/oder kompensiert.

Mit anderen Worten ermöglicht das erfindungsgemäße Verfahren insbesondere, dass Inhomogenitäten in einer Gesamtlichtverteilung überlagerter Teillichtverteilungen durch die Verwendung eines (zur Beleuchtungseinrichtung zusätzlich vorgesehenen) hochauflösenden Lichtmoduls kompensiert werden können. Die Verwendung eines hochauflösenden Lichtmoduls bietet den Vorteil, dass es eine insgesamt sehr homogene Ausleuchtung ermöglicht.

Insbesondere wird vorgeschlagen, (wenigstens teilweise) eine Kompensierung einer Inhomogenität in der Gesamtlichtverteilung der Beleuchtungseinrichtung durch ein Lichtmodul (in Form des hochauflösenden Lichtmoduls) vorzunehmen, mittels welcher eine im Vergleich zu der Beleuchtungseinrichtung eine Lichtverteilung mit (sehr viel) größerer Auflösung erzeugbar ist. Auf diese Weise können im Vergleich zur Beleuchtungseinrichtung sehr viel kleinere Lichtsegmente (einer auf eine Projektionsfläche oder Fahrbahn projizierter Lichtverteilung) an eine vorgegebene (ideale oder referenzierte) Soll-Lichtstärke angepasst werden. Hierdurch ist vorteilhafte eine feinere Abstufung der Lichtverteilung und damit eine insgesamt homogener empfundene Gesamtlichtverteilung möglich.

Bevorzugt weist die Beleuchtungseinrichtung wenigstens ein Lichtmodul und besonders bevorzugt eine Vielzahl von Lichtmodulen auf. Dabei kann das wenigstens eine Lichtmodul die erste Teillichtverteilung und dasselbe Lichtmodul die wenigstens eine weitere Teillichtverteilung erzeugen. Die Beleuchtungseinrichtung kann aber auch wenigstens zwei verschiedene Lichtmodule und bevorzugt eine Vielzahl von Lichtmodulen aufweisen, welche jeweils eine Teillichtverteilung erzeugen. Bevorzugt wird mittels der erzeugten Kompensationslichtverteilung jeweils eine Inhomogenität reduziert und/oder kompensiert, welche sich aus der Überlagerung, bevorzugt jeweils, zweier, und besonders bevorzugt einer Vielzahl, dieser Teillichtverteilungen ergibt.

Dabei kann das vorgeschlagene Verfahren unabhängig von der Anzahl, Anordnung und dem Ort der verwendeten Lichtmodule eingesetzt werden. Das bedeutet, dass eine beliebige Kombination von Lichtmodulen möglich ist, welche insbesondere die erste Teillichtverteilung, die wenigstens eine weitere Teillichtverteilung und bevorzugt eine Vielzahl weiterer Teillichtverteilungen erzeugen. Insbesondere ist eine beliebige Kombination von Lichtmodulen möglich. Denkbar ist beispielsweise, dass die Beleuchtungseinrichtung ein Lichtmodul aufweist, welches mehrere verschiedene Lichtfunktionen (z.B. Matrix-Lichtverteilung und Vorfeld-Lichtverteilung) umsetzen kann (und dieses Lichtmodul insbesondere in einem gemeinsamen Gehäuse angeordnet ist). Ebenso wäre eine Auslagerung bzw. Anordnung einzelner Lichtmodule, beispielsweise in den Bereich des Stoßfängers, möglich.

Beispielsweise kann das hochauflösende Lichtmodul eine Kompensationslichtverteilung erzeugen, welche die eingangs erwähnten Streifeneffekte einer Matrix-Lichtverteilung kompensiert. Durch die Verwendung des hochauflösenden Lichtmoduls, welches den anderen Lichtverteilungen überlagert ist, kann durch Erzeugen eines definierten Kompensationsmusters eine deutlich homogenere Gesamtlichtverteilung erzielt werden.

Die vorgegebene Lichtfunktion kann dabei ausgewählt sein aus einer Gruppe, welche eine Grundausleuchtung im Nahbereich, eine Fernlichtfunktion, eine Abblendfunktion und dergleichen sowie Kombinationen hiervon umfasst. Beispielsweise kann es sich bei der vorgegebenen Lichtfunktion um eine Grundbeleuchtung im Nahbereich (realisiert durch ein Vorfeld-Modul der Beleuchtungsvorrichtung) und eine Fernlichtfunktion (realisiert durch ein Matrix-Modul der Beleuchtungsvorrichtung) handeln.

Bevorzugt wird jede Teillichtverteilung von (wenigstens) einer individuellen Lichtquelle erzeugt. Bei der Gesamtlichtverteilung kann es sich um die Überlagerung einer Vielzahl von Teillichtverteilungen handeln. Die erste und die wenigstens eine weitere Teillichtverteilung können von demselben Lichtmodul, wie etwa von einem Matrix-Modul, erzeugt werden.

Zusätzlich oder alternativ können die erste und wenigstens eine weitere Teillichtverteilung von einem (paarweise) voneinander verschiedenen Lichtmodul erzeugt werden und/oder zur Realisierung einer voneinander verschiedenen Lichtfunktion erzeugt werden. So kann etwa die erste Teillichtverteilung von einem Matrix-Modul und die weitere Teillichtverteilung von einem Vorfeld-Modul erzeugt werden. Dabei können die zwei voneinander verschiedenen Lichtmodule bevorzugt zur Realisierung einer voneinander verschiedenen Lichtfunktion geeignet und bestimmt sein und/oder eine voneinander verschiedene Sekundäroptik aufweisen und/oder in einer voneinander verschiedenen Kavität eines Reflektors oder Gehäuses angeordnet sein.

Unter einer Inhomogenität ist insbesondere eine Abweichung der Gesamtlichtverteilung von einer vorgegebenen, insbesondere referenzierten und/oder idealen, Soll-Gesamtlichtverteilung der von der Beleuchtungseinrichtung zur Realisierung der vorgegebenen Lichtfunktion erzeugten Gesamtlichtverteilung (aus den überlagerten Teillichtverteilungen) zu verstehen. Dabei kann es sich um eine vorgegebene (prozentuale oder absolute) Mindestabweichung von der Soll-Gesamtlichtverteilung (außerhalb eines Toleranzbereichs) handeln. Bevorzugt handelt es sich bei einer Inhomogenität um einen Bereich (insbesondere vorgegebener Größe) mit einem im Vergleich zur Ziel-Gesamtlichtverteilung geringerer Lichtstärke.

Insbesondere kann es sich bei einer Inhomogenität um einen dunklen Bereich, einen Schatten, eine dunkle Kante und/oder eine dunkle Linie in der auf eine Fahrbahn oder eine Projektionsfläche projizierte Gesamtlichtverteilung handeln. Denkbar ist aber auch, dass es sich bei einer Inhomogenität um einen Bereich der auf eine Fahrbahn oder eine Projektionsfläche projizierten Gesamtlichtverteilung handelt, welcher ein vorgegebenes Maß an Lichtstärkeschwankungen überschreitet oder Lichtstärkesprünge aufweist. Unter einer Projektionsfläche wird insbesondere eine sich zur Hauptprojektionsrichtung der Beleuchtungsvorrichtung und/oder Fahrtrichtung des Fahrzeugs im Wesentlichen in senkrechter Richtung erstreckende, ebene Fläche verstanden.

Bevorzugt handelt es sich bei einer Inhomogenität um ein Lichtsegment der Gesamtlichtverteilung, welches einen im Vergleich zu einem vorgegebenen Referenzwert höheren Lichtstärkegradient aufweist.

Bevorzugt wird lichtpixelweise ermittelt, ob eine Inhomogenität der Gesamtlichtverteilung vorliegt. Bei den Lichtpixeln handelt es sich dabei um das kleinste, unabhängig voneinander in ihrer Lichtstärke steuerbare Lichtsegment der von dem hochauflösenden Lichtmodul erzeugten hochaufgelösten Lichtverteilung. Vorteilhaft stehen bei dem hochauflösenden Lichtmodul um ein Vielfaches mehr an einzeln in ihrer Lichtstärke, unabhängig voneinander steuerbarer Lichtsegmente (den sogenannten Lichtpixeln) zur Verfügung als bei der Beleuchtungseinrichtung. Dadurch kann eine sehr viel höhere Feinabstimmung und Approximation an eine Soll-Gesamtlichtverteilung vorgenommen werden.

Bei einem bevorzugten Verfahren wird die Kompensationslichtverteilung in einem Bereich, insbesondere einem Übergangsbereich, zwischen zwei unterschiedlich hellen, insbesondere benachbarten, Bereichen der Gesamtlichtverteilung bereitgestellt (insbesondere bei Projektionsfläche auf eine Projektionsfläche). Die beiden Bereiche unterscheiden sich insbesondere in ihrer Gesamtlichtintensität pro Fläche. Bevorzugt grenzt der Übergangsbereich unmittelbar an zwei Bereiche an (insbesondere bei Projektion auf eine Projektionsfläche gesehen), in welchen die Gesamtlichtverteilung eine höhere Lichtstärke aufweist als in dem Übergangsbereich. Dies bietet den Vorteil, dass als störend empfundene Helligkeitsschwankungen innerhalb eines ausgeleuchteten Bereichs ausgeglichen werden können. Mit anderen Worten erfolgt bevorzugt keine Ergänzung der Gesamtlichtverteilung durch die Kompensationslichtverteilung in einem äußeren Randbereich der Gesamtlichtverteilung und/oder über einen äußeren Randbereich der Gesamtlichtverteilung hinaus, sondern bevorzugt erhöht die Kompensationslichtverteilung die Lichtstärke der Gesamtlichtverteilung wenigstens bereichsweise in einem Innenbereich der Gesamtlichtverteilung (bei Projektion auf eine Projektionsfläche).

Bevorzugt weist die Kompensationslichtverteilung bei Projektion auf eine Projektionsfläche ein Kompensationsmuster auf, welches bevorzugt wenigstens bereichsweise im Wesentlichen streifenförmig und/oder im Wesentlichen balkenförmig und/oder im Wesentlichen gitterförmig ausgebildet ist.

Bevorzugt wird eine Kompensationslichtverteilung erzeugt, welche eine gleichmäßige Änderungsrate der Lichtstärke in der Überlagerung der Kompensationslichtverteilung und der von der Beleuchtungseinrichtung erzeugten Gesamtlichtverteilung bewirkt und damit beispielsweise stufenförmig abrupte Übergänge in der Lichtstärke benachbarter Lichtsegmente der Gesamtlichtverteilung abschwächt.

Bevorzugt ist die Kompensationslichtverteilung (in Hinblick auf eine jeweilige Projektion der Lichtverteilungen auf eine Projektionsfläche) wenigstens bereichsweise zwischen der ersten Teillichtverteilung und der weiteren Teillichtverteilung angeordnet. Besonders bevorzugt wird die Kompensationslichtverteilung in einem Bereich erzeugt, in welchem die erste Teillichtverteilung und die weitere Teillichtverteilung erzeugt wird (insbesondere in Hinblick auf eine jeweilige Projektion auf eine Projektionsfläche), also insbesondere in einem Überlappungsbereich der ersten Teillichtverteilung und der weiteren Teillichtverteilung. Damit können vorteilhaft eine abfallende Lichtstärke der ersten Teillichtverteilung und der weiteren Teillichtverteilung in Randbereichen dieser verstärkt und/oder erhöht werden. In Hinblick auf eine Projektion der jeweiligen Lichtverteilungen auf eine Projektionsfläche deckt damit bevorzugt die Kompensationslichtverteilung eine kleinere Fläche ab als die Gesamtlichtverteilung. Bevorzugt deckt die Kompensationslichtverteilung auf der Projektionsfläche nur 1/10, bevorzugt nur 1/20, besonders bevorzugt nur 1/50 der von der zur Realisierung der vorgegebenen Lichtfunktion erzeugten Lichtverteilung, insbesondere von der Gesamtlichtverteilung (erzeugt durch die Beleuchtungseinrichtung), abgedeckten Fläche ab.

Bevorzugt wird der Hauptanteil der zur Realisierung der vorgegebenen Lichtfunktion zu erzeugenden Lichtverteilung von der Beleuchtungseinrichtung selbst erzeugt. Die von dem hochauflösenden Modul erzeugte Kompensationslichtverteilung soll lediglich zur Kompensierung von Inhomogenitäten verwendet werden. Bevorzugt beträgt der Anteil der Lichtleistung der Kompensationslichtverteilung an der gesamten, zur Realisierung der vorgegebenen Lichtfunktion erforderlichen Lichtleistung weniger als 10%, bevorzugt weniger als 5%, bevorzugt weniger als 2% und besonders bevorzugt weniger als 1%.

Denkbar ist auch, dass beispielsweise durch die Kompensationslichtverteilung Defekte und/oder Störungen in der Gesamtlichtverteilung ausgeglichen werden, welche beispielsweise durch eine Alterung oder etwa gar durch einen Ausfall einer Lichtquelle hervorgerufen werden.

Bei einem weiter bevorzugten Verfahren weist die hochaufgelöste Lichtverteilung neben der Kompensationslichtverteilung, zumindest in einem Betriebsmodus, einen weiteren Anteil auf, welcher der Realisierung einer weiteren Lichtfunktion dient. Dies bietet den Vorteil, dass das hochaufgelöste Lichtmodul neben der Kompensierung von Inhomogenitäten auch eine eigene, und insbesondere eine von der vorgegebenen Lichtfunktion verschiedene Lichtfunktion realisieren kann. Mit anderen Worten ist ebenfalls möglich, dass das hochaufgelöste Lichtmodul eine eigene Lichtverteilung erzeugt und das Kompensationsmuster dieser überlagert wird. Bevorzugt kann das hochaufgelöste Lichtmodul eine Abblendfunktion und/oder eine Fernlichtfunktion unterstützen.

Bevorzugt kann der weitere Anteil der hochaufgelösten Lichtverteilung die Erhöhung einer Lichtperformance und/oder eine erhöhte Funktionalität, wie beispielsweise der Projektion einer lichtbasierten Assistenzfunktion, realisieren.

Denkbar ist aber auch, dass, zumindest in einem Betriebsmodus, (insbesondere zumindest zeitweise) die gesamte hochaufgelöste Lichtverteilung ausschließlich als Kompensationslichtverteilung verwendet wird. In diesem Betriebsmodus dient das hochaufgelöste Lichtmodul ausschließlich der Kompensation von Inhomogenitäten und damit der Optimierung der resultierenden von der Beleuchtungsvorrichtung ausgestrahlten Lichtverteilung.

Zur Realisierung des beschriebenen Kompensationsverfahrens, muss die relative Lage der Field-of-Views der Lichtmodule und/oder der Lichtquellen, welche die erste und die wenigstens eine weitere Teillichtverteilung erzeugen, bekannt sein. Eine initiale Kalibrierung kann deshalb End-of-Line erfolgen. Die Beleuchtungsvorrichtung, insbesondere der Scheinwerfer, wird dann bevorzugt kalibriert vom Lieferanten geliefert.

Bevorzugt wird ein Lagewert, welcher charakteristisch ist für die relative Lage der Field of Views verschiedener Lichtmodule der Beleuchtungsvorrichtung, ermittelt.

Im erfindungsgemäßen Verfahren wird somit in Abhängigkeit wenigstens eines Lagewerts, welcher für eine relative Anordnung der Teillichtverteilungen bezüglich einander, insbesondere der ersten Teillichtverteilung bezüglich der wenigstens einen weiteren Teillichtverteilung, charakteristisch ist, ein Kompensationsmuster (bevorzugt aus einer Vielzahl vorgegebener Kompensationsmuster) ausgewählt und/oder ermittelt (und/oder bestimmt), welches für die zu erzeugende Kompensationslichtverteilung charakteristisch ist. Dies bietet den Vorteil, dass damit in hoher Genauigkeit bestimmt werden kann, in welchen Bereichen Inhomogenitäten, insbesondere Dunkelstellen, auftreten.

Bevorzugt umfasst das Verfahren einen oder mehrere der folgenden, bevorzugt entsprechend der angegebenen Reihenfolge vorzunehmende, Kalibrierschritte zum Kalibrieren der Beleuchtungsvorrichtung:
Bevorzugt wird in einem (ersten) Kalibrierschritt der Betriebsmodus der vorgegebenen Lichtfunktion der Beleuchtungsvorrichtung aktiviert, und bevorzugt wird durch die Beleuchtungseinrichtung eine Fahrbahn und/oder Projektionsfläche entsprechend der vorgegebenen Lichtfunktion beleuchtet. Bevorzugt erzeugt die Beleuchtungseinrichtung die wenigstens erste Teillichtverteilung und die wenigstens eine weitere Teillichtverteilung. Die aus der Überlagerung dieser Teillichtverteilungen gebildete Gesamtlichtverteilung wird auf eine Fahrbahn und/oder Projektionsfläche abgebildet und/oder projiziert.

Bevorzugt wird in einem weiteren Kalibrierschritt der beleuchtete Bereich der Fahrbahn und/oder der Projektionsfläche bevorzugt mittels einer Bilderfassungseinrichtung und besonders bevorzugt mittels einer Kamera, insbesondere optisch, erfasst. Bevorzugt wird zumindest die (auf die Fahrbahn und/oder Projektionsfläche) abgebildete und/oder projizierte Gesamtlichtverteilung erfasst.

Bevorzugt wird in einem weiteren Kalibrierschritt aus der erfassten Gesamtlichtverteilung eine oder mehrere Inhomogenitäten ermittelt, insbesondere durch Vergleich mit einer vorgegebenen (referenzierten und/oder idealen) Soll-Gesamtlichtverteilung und bevorzugt unter Berücksichtigung eines vorgegebenen Schwellwerts, der charakteristisch ist für eine tolerierbare Abweichung von der Soll-Gesamtlichtverteilung. Bevorzugt erfolgt der Vergleich bereichsweise, bevorzugt segmentweise und besonders bevorzugt pixelweise basierend auf Lichtsegmente, die den durch das hochauflösende Lichtmodul erzeugbaren Lichtpixeln entsprechen. Denkbar ist aber auch, dass die Inhomogenitäten ermittelt werden, indem die erfasste Gesamtlichtverteilung auf Lichtstärkeschwankungen und/oder Lichtstärkesprünge hin untersucht wird.

Bevorzugt wird in einem weiteren Kalibrierschritt auf Grundlage der ermittelten wengistens einen Inhomogenität oder der Vielzahl an Inhomogenitäten eine durch das hochauflösende Lichtmodul zu erzeugende Kompensationslichtverteilung oder ein hierfür charakteristisches Kompensationsmuster bestimmt. Bevorzugt wird hierzu ein Kompensationsmuster aus einer Vielzahl abgelegter Kompensationsmuster ausgewählt und/oder (insbesondere durch Abänderung eines vorgegebenen Kompensationsmusters) ermittelt, welches charakteristisch ist für die zu erzeugende Kompensationslichtverteilung. Bevorzugt wird das Kompensationsmuster in einer Speichereinrichtung abgelegt.

Denkbar sind insbesondere die folgenden drei verschiedenen Kalibriermethoden, welche bevorzugt einen oder mehrere der obig genannten Kalibrierschritte umfassen:
In einer statischen Kalibriermethode wird bei aktiviertem Betriebsmodus (der vorgegebenen Lichtfunktion), insbesondere unabhängig von einer jeweiligen (dynamischen) Fahrsituation, stets dieselbe Kompensationslichtverteilung erzeugt, welche lediglich von der Wahl der vorgegebenen Lichtfunktion abhängig ist. Bevorzugt erfolgt hier eine insbesondere (lediglich einmalige) initiale Festlegung eines (statischen) Kompensationsmusters. Bei (jeder) Aktivierung des Betriebsmodus der vorgegebenen Lichtfunktion wird stets dieselbe (unveränderte) Kompensationslichtverteilung erzeugt.

Bei einer dynamischen Kalibriermethode kann eine Adaption an eine jeweilige (dynamische) Fahrsituation und/oder Betriebssituation der Beleuchtungsvorrichtung vorgenommen werden. Beispielsweise kann eine (insbesondere momentane) Leuchtweitenregulierung der Beleuchtungsvorrichtung und/oder eine Schwenk- und/oder Neigungsbewegung bei der Erzeugung der Kompensationslichtverteilung berücksichtigt werden. Auf diese Weise kann eine Verschiebung der Lage der Lichtverteilungen zueinander berücksichtigt werden. Bevorzugt wird hierzu insbesondere vor der Inbetriebnahme der Beleuchtungsvorrichtung eine (Verschiebungs-)Kennlinie gemessen und besonders bevorzugt in einer Speichereinrichtung hinterlegt. Aus der abgelegten (Verschiebungs-)Kennlinie ist ermittelbar, welches Kompensationsmuster (aus einer Vielzahl abgelegter Kompensationsmuster) in Abhängigkeit wenigstens eines - für die aktuelle Fahrsituation und/oder Betriebssituation und/oder aktuelle relative Lage wenigstens zweier Lichtmodule zueinander charakteristischen - Kennwerts zu wählen ist. Dies bietet den Vorteil, dass das gewählte Kompensationsmuster und damit die zu erzeugende Kompensationslichtverteilung an die jeweilige Fahr- und/oder Lagesituation angepasst werden kann, beispielsweise an die bei einer Kurvenfahrt vorliegende relative Lage und/oder Anordnung einzelner Lichtquellen und/oder Lichtmodule zueinander. Hierdurch wird weiterhin die Genauigkeit der Kompensierung erhöht.

Eine weitere Möglichkeit ist eine echtzeitfähige Kalibriermethode. In dieser erfolgt bevorzugt wenigstens ein und besonders bevorzugt erfolgen alle Kalibrierschritte während eines aktivierten Betriebsmodus der Beleuchtungsvorrichtung und insbesondere während eines Fahrbetriebs des (Straßen-)Fahrzeugs. Bevorzugt wird wenigstens zeitweise während des aktivierten Betriebsmodus und/oder während des Fahrzeugbetriebs ein Kompensationsmuster (neu) ermittelt und/oder abgeändert. Bevorzugt wird im Rahmen eines Regelkreises ein Kompensationsmuster auf Grundlage wenigstens eines (während des Fahrbetriebs) aufgenommenen Messwerts ermittelt. Bevorzugt wird hierzu eine dem ermittelten Kompensationsmuster entsprechende Kompensationslichtverteilung erzeugt und die erhaltene Überlagerung der Gesamtlichtverteilung (der Beleuchtungseinrichtung) mit der Kompensationslichtverteilung mit einer (idealen und/oder referenzierten) vorgegebenen Lichtverteilung verglichen. Alternativ oder zusätzlich ist ebenfalls möglich, dass ein aufgenommenes Bild der mit der erzeugten Kompensationslichtverteilung überlagerten Gesamtlichtverteilung auf dunkle Bereiche hin untersucht wird.

Bei einem weiter bevorzugten Verfahren wird das Kompensationsmuster iterativ in Abhängigkeit des Lagewerts bestimmt/ermittelt, wobei bevorzugt der Lagewert aus einer optisch (insbesondere mit einer Kamera) erfassten Anordnung der Teillichtverteilungen bezüglich einander ermittelt wird. Durch die iterative Vorgehensweise kann vorteilhaft eine schrittweise Annäherung an eine möglichst optimierte Lichtverteilung sowie eine Real-Time-Umsetzung ermöglicht werden.

Die vorliegende Erfindung ist zudem ebenfalls gerichtet auf ein Kalibrierverfahren zur Kalibrierung einer Beleuchtungsvorrichtung für ein (Straßen-)Fahrzeug, welche in einem Betriebsmodus einer vorgegebenen Lichtfunktion mittels einer Beleuchtungseinrichtung eine Gesamtlichtverteilung aus einer ersten Teillichtverteilung und wenigstens einer weiteren Teillichtverteilung erzeugt und/oder abstrahlt und welche mittels einer hochauflösenden Lichtmoduls eine hochaufgelöste Lichtverteilung erzeugen kann. Erfindungsgemäß umfasst das Kalibrierverfahren das Bestimmen und/oder Ermitteln einer von dem hochauflösenden Lichtmodul, zumindest anteilig, zu erzeugenden Kompensationslichtverteilung. Dabei wird in dem Betriebsmodus der vorgegebenen Lichtfunktion mittels der zu erzeugenden Kompensationslichtverteilung eine in der Gesamtlichtverteilung vorliegende Inhomogenität reduziert und/oder kompensiert.

Bevorzugt umfasst das Kalibrierverfahren wenigstens einen der obig angegebenen Kalibrierschritte. Weiterhin kann das Kalibrierverfahren weitere obig angegebene Kalibrierschritte und/oder Verfahrensschritte zum Betreiben einer Beleuchtungsvorrichtung einzeln oder in Kombination miteinander umfassen.

Die vorliegende Erfindung ist weiterhin auf eine Beleuchtungsvorrichtung, insbesondere einen Scheinwerfer, für ein Straßenfahrzeug gerichtet. Dabei weist die Beleuchtungsvorrichtung eine Beleuchtungseinrichtung auf, welche in einem Betriebsmodus einer vorgegebenen Lichtfunktion zur Erzeugung und/oder Abstrahlung einer Gesamtlichtverteilung aus einer Überlagerung einer ersten Teillichtverteilung und wenigstens einer weiteren Teillichtverteilung eingerichtet ist. Weiterhin weist die Beleuchtungsvorrichtung ein hochauflösendes Lichtmodul zur Erzeugung einer hochaufgelösten Lichtverteilung auf.

Erfindungsgemäß ist die Beleuchtungsvorrichtung dazu eingerichtet, dass das hochauflösende Lichtmodul in dem Betriebsmodus der vorgegebenen Lichtfunktion, zumindest anteilig, und bevorzugt zumindest zeitweise, eine Kompensationslichtverteilung erzeugt, mittels welcher eine in der Gesamtlichtverteilung vorliegende Inhomogenität reduziert und/oder kompensiert wird.

Unter zumindest anteilig ist insbesondere zu verstehen, dass die erzeugte Kompensationslichtverteilung lediglich einen Anteil der von dem hochauflösenden Modul erzeugten hochaufgelösten Lichtverteilung darstellt und insbesondere ein weiterer Anteil der erzeugten hochaufgelösten Lichtverteilung zur Realisierung einer weiteren, insbesondere von der vorgegebenen Lichtfunktion verschiedenen Lichtfunktion verwendet wird. Denkbar ist aber auch, dass das hochauflösende Lichtmodul, zumindest zeitweise, ausschließlich die Kompensationslichtverteilung (als gesamte hochaufgelöste) Lichtverteilung erzeugt.

Bevorzugt ist die Vorrichtung dazu eingerichtet, geeignet und/oder bestimmt, das obig beschriebene Verfahren sowie alle bereits obig im Zusammenhang mit dem Verfahren beschriebene Verfahrensschritte einzeln oder in Kombination miteinander auszuführen. Umgekehrt kann das Verfahren mit allen im Rahmen der Vorrichtung beschriebenen Merkmalen einzeln oder in Kombination miteinander ausgestattet sein.

Es wird also auch im Rahmen der erfindungsgemäßen Vorrichtung vorgeschlagen, dass ein hochauflösendes Lichtmodul dazu verwendet wird, Inhomogenitäten in einer Gesamtlichtverteilung überlagerter Teillichtverteilungen, welche insbesondere in einem Überlagerungsbereich dieser auftreten, zu kompensieren. Hierdurch kann der Vorteil eines hochauflösenden Lichtmoduls, welches im Gegensatz zu anderen Lichtmodulen - wie etwa den eingangs erwähnten Matrixmodulen - eine insgesamt sehr homogene Ausleuchtung ermöglicht, genutzt werden.

Es wird also insbesondere vorgeschlagen, dass in der Form des hochauflösenden Lichtmoduls (wenigstens) ein zusätzliches Lichtmodul vorgesehen ist, welches von der Beleuchtungseinrichtung verschieden ist und insbesondere eine hiervon verschiedene Sekundäroptik aufweist und/oder in einer jeweils voneinander verschiedenen Kavität (eines Reflektors oder eines Gehäuses) angeordnet sind. Bevorzugt ist das hochauflösende Lichtmodul dazu eingerichtet, geeignet und bestimmt, mindestens eine von der Beleuchtungseinrichtung verschiedene Lichtfunktion umzusetzen.

Bevorzugt weist die Beleuchtungseinrichtung wenigstens ein Linsenmodul und/oder Reflektormodul zur Erzeugung der ersten Teillichtverteilung und/oder der wenigstens weiteren Teillichtverteilung auf. Vorgeschlagen wird damit, die erzeugte Lichtverteilung eines solchen "klassischen Lichtmoduls" einer Beleuchtungsvorrichtung eines Fahrzeugs mittels hochaufgelöster Lichtverteilung zu optimieren. Auf diese Weise kann die zu erzeugende Lichtverteilung eines (beliebigen) Lichtmoduls möglichst gut an eine ideale Lichtverteilung angenähert werden.

In einer vorteilhaften Ausführungsform weist die Beleuchtungseinrichtung wenigstens ein Matrix-Modul, insbesondere ein LED-Matrix-Modul, zur Erzeugung der ersten Teillichtverteilung und der weiteren Teillichtverteilung auf. Insbesondere dient die Kompensationslichtverteilung, wenigstens teilweise und bevorzugt ausschließlich, der Kompensierung einer oder einer Vielzahl von Inhomogenitäten dieser Teillichtverteilungen. Damit wird vorteilhaft das hochauflösende Lichtmodul verwendet, eine Matrix-Lichtverteilung, insbesondere wenigstens einen Übergangsbereich ihrer von verschiedenen Lichtquellen erzeugten Teilleichtverteilungen, zu homogenisieren und/oder zu optimieren.

In einer weiter vorteilhaften Ausführungsform weist die Beleuchtungseinrichtung wenigstens zwei, insbesondere voneinander verschiedene, Lichtmodule zur jeweiligen Erzeugung einer Teillichtverteilung auf, wobei es sich bevorzugt um ein Matrix-Modul und ein Vorfeld-Modul handelt. Auf diese Weise wird vorteilhaft erreicht, dass ein oder mehrere Übergangsbereiche zwischen den von verschiedenen Lichtmodulen erzeugten Lichtverteilungen optimiert und an eine vorgegebene (ideale) Lichtverteilung angenähert werden können.

Bevorzugt weist die Beleuchtungsvorrichtung eine Speichereinrichtung auf, auf der Daten abgelegt sind und/oder ablegbar sind, welche für wenigstens eine zu erzeugende Kompensationslichtverteilung charakteristisch sind. Bevorzugt sind auf der Speichereinrichtung derartige Daten jeweils für eine Vielzahl (verschiedener) vorgegebener Lichtfunktionen abgelegt. So können etwa für ein Kompensationsmuster oder eine Vielzahl von Kompensationsmustern (jeweils) charakteristische Daten abgelegt sein.

Bevorzugt ist die Speichereinrichtung in einem zentralen Steuergerät des Fahrzeugs angeordnet. Die Beleuchtungsvorrichtung kann beispielsweise einen Scheinwerfer und eine außerhalb des Scheinwerfers angeordnete Speichereinrichtung aufweisen. Damit sind die funktions- und sicherheitsrelevanten Daten bevorzugt nicht in einem Scheinwerfer bzw. innerhalb eines Scheinwerfergehäuses sondern in einem zentralen Bereich des Fahrzeugs hinterlegt. Grundsätzlich wäre aber auch eine Anordnung der Speichereinrichtung innerhalb des Scheinwerfergehäuses bzw. in dem Scheinwerfer des Fahrzeugs denkbar.

In einer weiter vorteilhaften Ausführungsform weist die Beleuchtungsvorrichtung eine Speichereinrichtung auf, in welcher wenigstens eine Kennlinie (oder ein hierfür charakteristischer Datensatz) abgelegt ist, mithilfe derer, bevorzugt in Abhängigkeit der relativen Anordnung der Lichtmodule bezüglich einander, ein Kompensationsmuster (insbesondere aus einer Vielzahl abgelegter Kompensationsmuster) auswählbar und/oder ermittelbar ist, welches für die zu erzeugende Kompensationslichtverteilung charakteristisch ist.

Je nach mechanischem Aufbau der Lichtmodule kann es passieren, dass sich bei einer Schwenk- oder Neigungsbewegung die Lage der Lichtverteilung zueinander verschiebt. Damit würde die Kompensation der Inhomogenitäten nicht mehr an der richtigen Stelle erfolgen. Bevorzugt kann daher als Kennlinie eine Verschiebungskennlinie abgelegt sein, anhand welcher in Abhängigkeit eines (gemessenem und/oder übermittelten) Schwenk- und/oder Neigungswinkel ein hieran angepasstes Kompensationsmuster generierbar ist.

Bevorzugt weist die Beleuchtungsvorrichtung eine Kalibriereinrichtung zur Kalibrierung und/oder Einstellung auf, mittels welcher eine relative Lage der Field-of-Views der Beleuchtungseinrichtung und des hochauflösenden Moduls einstellbar ist. Auf diese Weise kann eine Disjustage der Field-of-Views über die Laufzeit kompensiert werden. Die Kalibriereinrichtung kann eine Kamera aufweisen. Bevorzugt ist die Kalibriereinrichtung dazu geeignet und bestimmt, eine mechanische Verlagerung der Lichtverteilung des hochauflösenden Moduls relativ zur Beleuchtungseinrichtung festzustellen und/oder zu ermitteln. Bei mechanischer Verlagerung der Lichtverteilung kann insbesondere digital durch ein angepasstes Lichtbild der mechanische Versatz kompensiert werden. Das Verfahren kann jedoch auch ohne Kamerabasierte Kalibrierung umgesetzt werden. Wichtig ist, eine regelmäßige Prüfung der Scheinwerfereinstellung, wie sie heute schon gefordert ist.

Das hochauflösende Lichtmodul ist insbesondere zur pixelweisen und pixelindividuell steuerbaren Lichtabstrahlung in die Umgebung des Lichtmoduls und/oder der Beleuchtungsvorrichtung geeignet und bestimmt. Insbesondere ist das Lichtmodul dazu geeignet und bestimmt, eine aus einer Vielzahl von Lichtpixeln gebildete Abbildung zu erzeugen. Hierdurch ist das hochauflösende Lichtmodul dazu geeignet und bestimmt, Muster von im Wesentlichen beliebiger Form zu projizieren.

Das hochauflösende Lichtmodul weist bevorzugt wenigstens einen Lichtmodulator auf, welcher bevorzugt ausgebildet ist als DMD (Digital Mirror Device), LCD (Liquid Crystal Display) und/oder als Liquid Crystal on Silicon (LCoS). Dabei sind einzelne Bildelemente des Lichtmodulators bevorzugt ansteuerbar, wodurch Lichtverteilungen, die einem Muster von im Wesentlichen beliebiger Form folgen, erzeugt werden können. Bevorzugt weist das hochauflösende Lichtmodul eine Abbildungsoptik auf, welche im optischen Strahlengang zwischen einer Lichtquelle und dem Lichtmodulator angeordnet ist. Bevorzugt weist das hochauflösende Lichtmodul eine Projektionsoptik zum Projizieren des vom Lichtmodulator modulierten Lichts auf die Projektionsfläche auf.

Bevorzugt weist das hochauflösende Lichtmodul eine Mikropixel-LED auf, welche insbesondere mehrere Hundert bis Tausend einzeln ansteuerbare Pixel aufweist. Üblicherweise weisen derzeitige Mikropixel-LEDs insbesondere eine Fläche von 4x4 mm² und 1024 Pixel (Bildelemente) auf. Denkbar ist auch die Verwendung von Mikropixel-LEDs mit zwischen zehn- und zwanzig-Tausend Pixel. Ein derartiges hochaufgelöstes Lichtmodul ist dazu geeignet und bestimmt, in sehr hoher Auflösung Inhalte auszugeben. Bevorzugt weist das hochauflösende Lichtmodul eine in der optischen Abstrahlrichtung nach der Mikropixel-LED angeordnete Projektionsoptik auf.

Bei einem Matrix-Modul handelt es sich insbesondere um eine Lichtabgabeeinrichtung, aufweisend eine Matrix aus individuell steuerbaren Lichtabgabe-Pixelelementen zur Erzeugung eines aus Lichtpixeln gebildeten Ursprungslichtbilds. Bevorzugt weist das Matrix-Modul, insbesondere das LED-Matrix-Modul, eine Vielzahl matrixartig angeordneter Lichtquellen, insbesondere LEDs, und eine hiermit bestückte, Platine auf. Bevorzugt weist das Matrix-Modul, insbesondere das LED-Matrix-Modul, wenigstens einen Kühlkörper zur Kühlung der während ihres Betriebs entstehenden Wärme auf, wobei der Kühlkörper bevorzugt wärmeleitend mit der Platine verbunden ist. Bevorzugt ist jedem der Lichtquellen, insbesondere jeder LED, ein Primäroptikelement zur Formung und Richtungsgebung eines eingekoppelten Lichts zugeordnet, in das Licht der entsprechenden Lichtquelle, insbesondere der entsprechenden LED, eingekoppelt werden kann.

Bevorzugt weist das Matrix-Modul wenigstens 50, bevorzugt wenigstens 80 und/oder weniger als 1000, bevorzugt weniger als 300 einzeln aktivierbare und/oder individuell ansteuerbare Lichtsegmente auf.

Die vorliegende Erfindung ist weiterhin gerichtet auf ein (Straßen-)Fahrzeug, insbesondere ein Kraftfahrzeug, mit wenigstens einer Beleuchtungsvorrichtung gemäß einer der obig beschriebenen Ausführungsformen und bevorzugt mit wenigstens zwei Beleuchtungsvorrichtungen gemäß einer der obig beschriebenen Ausführungsformen. Die Beleuchtungsvorrichtung bzw. die Beleuchtungsvorrichtungen kann bzw. können dabei jeweils oder beide mit allen obig im Zusammenhang mit der Beleuchtungsvorrichtung beschriebenen Merkmale einzeln oder in Kombination miteinander ausgestattet sein. Bevorzugt ist das (Straßen-)Fahrzeug zur Durchführung des Verfahrens eingerichtet und bestimmt.

Denkbar ist auch, dass es sich bei dem Straßenfahrzeug um einen LKW oder ein motorbetriebenes Zweirad, insbesondere ein Motorrad handelt.

Weitere Vorteile und Ausführungsformen ergeben sich aus den beigefügten Zeichnungen: Darin zeigen:
- Fig. 1: eine schematische Darstellung einer auf eine Projektionsfläche projizierte Überlagerung von Lichtverteilungen, welche durch verschiedene Lichtmodule einer Beleuchtungsvorrichtung nach dem Stand der Technik erzeugt werden können;
- Fig. 2: drei schematische Darstellungen zur Veranschaulichung der Bildung einer durch eine erfindungsgemäße Beleuchtungsvorrichtung erzeugte Lichtverteilung aus einer Gesamtlichtverteilung und einer Kompensationslichtverteilung;
- Fig. 3: eine schematische Darstellung eines Fahrzeugs 1 mit zwei erfindungsgemäßen Beleuchtungsvorrichtungen in einer Ausführungsform;
- Fig. 4: eine schematische Darstellung einer erfindungsgemäßen Beleuchtungsvorrichtung einer weiteren Ausführungsform.

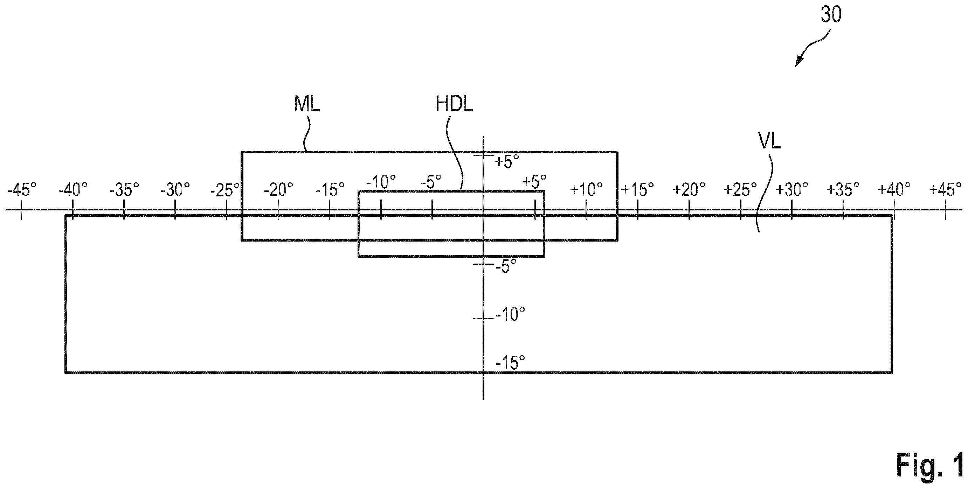

Fig. 1 zeigt eine schematische Darstellung der Überlagerung von Lichtverteilungen VL, HDL, ML, wie sie auf einer Projektionsfläche 30 durch verschiedene Lichtmodule einer Beleuchtungsvorrichtung 10, insbesondere eines Scheinwerfers, nach dem Stand der Technik erzeugt werden können. Bei der Projektionsfläche 30 handelt es sich insbesondere um eine, sich senkrecht zur Fahrtrichtung eines Fahrzeugs und/oder im Wesentlichen senkrecht zur Fahrbahn und/oder im Wesentlichen senkrecht zur Hauptabstrahlrichtung der Beleuchtungsvorrichtung erstreckende ebene Fläche, welche in Fig. 1 in der Figurenebene liegt.

Das Bezugszeichen VL kennzeichnet hier eine Lichtverteilung, durch welche ein Vorfeld-Modul 16 der Beleuchtungsvorrichtung 10 eine Grundausleuchtung im Nahbereich umsetzt. Ein Matrix-Modul 14 der Beleuchtungsvorrichtung 10 erzeugt hier eine Matrix-Lichtverteilung ML für den Fernlichtbetrieb und ein hochauflösendes Lichtmodul 12 kann mit einer erzeugten hochaufgelösten Lichtverteilung HDL sowohl Abblendlichtfunktionen als auch Fernlichtfunktionen unterstützen.

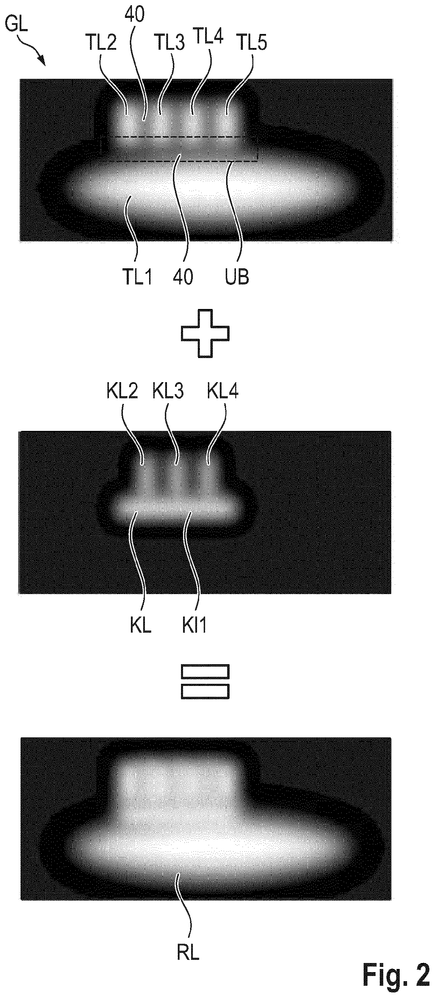

Fig. 2 zeigt drei schematische Darstellungen zur Veranschaulichung der Bildung einer durch eine erfindungsgemäße Beleuchtungsvorrichtung 10 erzeugte Lichtverteilung RL aus einer Gesamtlichtverteilung GL und einer Kompensationslichtverteilung KL.

In der oben links in Fig. 2 gezeigten Darstellung sind vereinfacht die Grundausleuchtung VL des Vorfeld-Moduls 16 sowie vier Segmente TL2, TL3, TL4, TL5 der Lichtverteilung ML des Matrix-Moduls 14 dargestellt. Es wird ersichtlich, dass die Segmente ein streifiges Erscheinungsbild aufweisen und sich eine dunkle Kante im Übergangsbereich UB zwischen der Vorfeld-Lichtverteilung VL und der Matrix-Lichtverteilung ML abzeichnet. Zwischen den vier Segmenten TL2, TL3, TL4 und TL5, welche mittels separater Teillichtverteilungen des Matrix-Moduls 14 erzeugt werden, bildet sich jeweils ein unerwünschter, streifenförmiger, dunkler Bereich aus. Diese Inhomogenität 40 in Form dunkler Bereiche zwischen den vier Segmenten TL2, ..., TL5 sowie zwischen der Vorfeld-Lichtverteilung VL und der Matrix-Lichtverteilung ML soll jeweils bestmöglich behoben bzw. kompensiert werden.

Die unten links in Fig. 2 gezeigte Darstellung zeigt ein definiertes Kompensationsmuster, welches durch Verwendung eines hochauflösenden Lichtmoduls 12 in einer erfindungsgemäßen Beleuchtungsvorrichtung 10 erzeugt werden kann. Im Vergleich zu der links oben dargestellten vereinfachten Grundausleuchtung VL ist ersichtlich, dass das Kompensationsmuster gerade in Bereichen eine Kompensationslichtverteilung KL vorsieht, in welchen die Gesamtlichtverteilung GL Inhomogenitäten 40 in Form von dunklen Bereichen oder Kanten aufweist. Beispielsweise wird eine Kompensationslichtverteilung KL1 in dem Übergangsbereich UB zwischen der Lichtverteilung ML des Matrix-Moduls 14 und der Lichtverteilung VL des Vorfeld-Moduls 16 erzeugt, um die in dem Übergangsbereich UB auftretende Inhomogenität 40 in Form einer dunklen Kante zu kompensieren. Zur Kompensierung der zwischen den vier Lichtsegmenten TL 2, ..., TL5 auftretenden Inhomogenitäten werden weiterhin in dem gezeigten Beispiel die Lichtverteilungen KL2, KL3 und KL4 als Teil der Kompensationslichtverteilung KL erzeugt, durch welche die Lichtintensität in den Bereichen zwischen den Lichtsegmenten TL2, TL3, TL4, TL5 erhöht und damit die jeweiligen Inhomogenitäten kompensiert werden soll.

Das rechte in Fig. 2 gezeigte Bild zeigt, dass durch Verwendung des hochauflösenden Lichtmoduls 12 und einer hiervon erzeugten hochaufgelösten Lichtverteilung HDL, welches den anderen (Teil-)Lichtverteilungen überlagert ist, durch Erzeugen eines definierten Kompensationsmusters (dargestellt in dem linken unteren Bild der Fig. 2) eine deutlich homogenere Gesamtlichtverteilung RL erzielt werden kann.

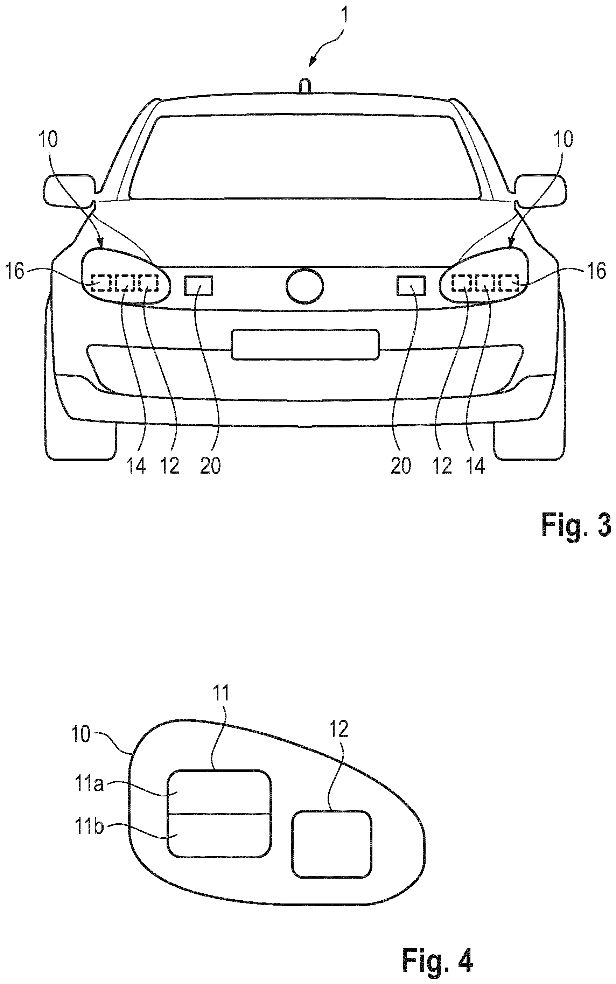

Fig. 3 zeigt eine schematische Darstellung eines Fahrzeugs 1 mit zwei erfindungsgemäßen Beleuchtungsvorrichtungen 10 in einer Ausführungsform. In der hier gezeigten Ausführungsform weist die Beleuchtungsvorrichtung 10, bei der es sich hier um einen Scheinwerfer handelt, drei nebeneinanderliegende einzelne Lichtmodule auf. Dabei kennzeichnet das Bezugszeichen 14 ein Matrix-Modul, das Bezugszeichen 16 ein Vorfeld-Modul. Schließlich kennzeichnet das Bezugszeichen 12 ein hochauflösendes Lichtmodul, mittels welchem Inhomogenitäten in der Gesamtlichtverteilung kompensierbar oder reduzierbar sind, welche insbesondere von dem Matrix-Modul 14 alleine oder in Kombination mit dem Vorfeld-Modul 16 oder aber von dem Vorfeld-Modul 16 alleine erzeugt wird.

Fig. 4 veranschaulicht ergänzend, eine von Fig. 3 verschiedene Ausführungsform einer Beleuchtungsvorrichtung 10 mit lediglich einem Lichtmodul als Beleuchtungseinrichtung 11 neben einem hochauflösenden Lichtmodul 12. Es ist technologisch möglich, die verschiedenen Lichtfunktionen in einem Lichtmodul 18 zu kombinieren. In diesem Beispiel weist damit die die Gesamtverteilung erzeugende Beleuchtungseinrichtung 11 der Beleuchtungsvorrichtung 10 lediglich ein einziges Lichtmodul auf. Das Lichtmodul 11 kann einen ersten Funktionsbereich 11a aufweisen, welcher eine erste Lichtfunktion (wie etwa das Erzeugen einer Matrix-Lichtverteilung) realisiert, und weiterhin (wenigstens) einen zweiten Funktionsbereich 11b aufweisen, welcher eine zweite Lichtfunktion (wie etwa das Erzeugen einer Vorfeld-Lichtverteilung) realisiert. Das hochauflösende Lichtmodul 12 kann eine Kompensationslichtverteilung KL erzeugen, welche Inhomogenitäten in der von dem ersten Funktionsbereich erzeugten Überlagerung von Teillichtverteilungen und/oder von dem zweiten Funktionsbereich erzeugten Teillichtungen kompensiert oder reduziert. Weiterhin kann durch die erzeugte Kompensationslichtverteilung eine in der Überlagerung einer von dem ersten Funktionsbereich erzeugten Teillichtverteilung und einer von dem zweiten Funktionsbereich erzeugten Teillichtverteilung bestehenden Inhomogenität kompensiert oder reduziert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

1 Straßenfahrzeug
10 Beleuchtungsvorrichtung
11 Beleuchtungseinrichtung
11a, 11b Funktionsbereiche
12 hochauflösendes Lichtmodul
14 Matrix-Modul
16 Vorfeld-Modul
18 Lichtmodul
20 Speichereinrichtung
30 Projektionsfläche
40 Inhomogenität
GL Gesamtlichtverteilung
KL Kompensationslichtverteilung
KL1, KL2, KL3, KL4 Teilbereiche der Kompensationslichtverteilung
TL1 erste Teillichtverteilung
TL2, TL3, TL4, TL5 weitere Teillichtverteilungen
HDL hochaufgelöste Lichtverteilung
ML Lichtverteilung des Matrix-Moduls
RL Resultierende Lichtverteilung
UB Übergangsbereich
VL Lichtverteilung des Vorfeld-Moduls

## Patentansprüche

1. Verfahren zum Betreiben einer Beleuchtungsvorrichtung (10), insbesondere eines Scheinwerfers, für ein Straßenfahrzeug (1), welche in einem Betriebsmodus einer vorgegebenen Lichtfunktion mittels einer Beleuchtungseinrichtung (11) eine Gesamtlichtverteilung (GL) aus einer ersten Teillichtverteilung (TL1) und wenigstens einer weiteren Teillichtverteilung (TL2, TL3) erzeugt und/oder abstrahlt, und welche mittels eines hochauflösenden Lichtmoduls (12) eine hochaufgelöste Lichtverteilung (HDL) erzeugen kann, **dadurch gekennzeichnet, dass**
in dem Betriebsmodus der vorgegebenen Lichtfunktion das hochauflösende Lichtmodul (12) eine hochaufgelöste Lichtverteilung (HDL) erzeugt, welche zumindest anteilig eine Kompensationslichtverteilung (KL) aufweist, mittels welcher eine in der Gesamtlichtverteilung (GL) vorliegende Inhomogenität (40), welche sich aus der Überlagerung dieser Teillichtverteilungen ergibt, reduziert und/oder kompensiert wird, wobei in Abhängigkeit wenigstens eines Lagewerts, welcher für eine relative Anordnung der Teillichtverteilungen (TL1, TL2) bezüglich einander charakteristisch ist, ein Kompensationsmuster ausgewählt und/oder ermittelt wird, welches für die zu erzeugende Kompensationslichtverteilung (KL) charakteristisch ist.

2. Verfahren nach Anspruch 1,
**dadurch gekennzeichnet, dass**
die Kompensationslichtverteilung (KL) in einem Übergangsbereich zwischen zwei unterschiedlich hellen, insbesondere benachbarten, Bereichen der Gesamtlichtverteilung (GL) bereitgestellt wird.

3. Verfahren nach einem der vorangegangenen Ansprüche,
**dadurch gekennzeichnet, dass**
die hochaufgelöste Lichtverteilung (HDL) neben der Kompensationslichtverteilung (KL) einen weiteren Anteil aufweist, welcher der Realisierung einer weiteren Lichtfunktion dient.

4. Verfahren nach Anspruch 1,
**dadurch gekennzeichnet, dass**
das Kompensationsmuster iterativ in Abhängigkeit des Lagewerts bestimmt/ermittelt wird, wobei bevorzugt der Lagewert aus einer optisch erfassten Anordnung der Teillichtverteilungen (TL1, TL2) bezüglich einander ermittelt wird.

5. Verfahren nach einem der vorangegangenen Ansprüche,
**dadurch gekennzeichnet, dass**
bei der Erzeugung der Kompensationslichtverteilung (KL) eine Leuchtweitenregulierung der Beleuchtungsvorrichtung (10) und/oder eine Schwenk- und/oder Neigungsbewegung berücksichtigt wird.

6. Verfahren nach einem der vorangegangenen Ansprüche,
**dadurch gekennzeichnet, dass**
die Beleuchtungsvorrichtung (10) mittels einer echtzeitfähigen Kalibriermethode kalibriert wird, in welcher wenigstens ein Kalibrierschritt während des emes aktivierten Betriebsmodus der Beleuchtungsvorrichtung (10) erfolgt.

7. Verfahren nach einem der vorangegangenen Ansprüche,
**dadurch gekennzeichnet, dass**
wenigstens zeitweise während des aktivierten Betriebsmodus der Beleuchtungsvorrichtung (10) ein Kompensationsmuster ermittelt und/oder abgeändert wird.

8. Verfahren nach einem der vorangegangenen Ansprüche,
**dadurch gekennzeichnet, dass**
in einem Kalibrierschritt der Betriebsmodus der vorgegebenen Lichtfunktion der Beleuchtungsvorrichtung aktiviert wird und die Beleuchtungseinrichtung die wenigstens erste Teillichtverteilung und die wenigstens eine weitere Teillichtverteilung erzeugt und die aus der Überlagerung dieser Teillichtverteilungen gebildete Gesamtlichtverteilung auf eine Fahrbahn und/oder Projektionsfläche abgebildet und/oder projiziert wird, wobei in einem weiteren Kalibrierschritt der beleuchtete Bereich der Fahrbahn und/oder der Projektionsfläche bevorzugt mittels einer Bilderfassungseinrichtung erfasst wird.

9. Beleuchtungsvorrichtung (10), insbesondere Scheinwerfer, für ein Straßenfahrzeug (1) mit einer Beleuchtungseinrichtung (11), welche in einem Betriebsmodus einer vorgegebenen Lichtfunktion zur Erzeugung und/oder Abstrahlung einer Gesamtlichtverteilung (GL) aus einer Überlagerung einer ersten Teillichtverteilung (TL1) und wenigstens einer weiteren Teillichtverteilung (TL2, TL3) eingerichtet ist, und weiterhin mit einem hochauflösenden Lichtmodul (12) zur Erzeugung einer hochaufgelösten Lichtverteilung (HDL),
**dadurch gekennzeichnet, dass**
die Beleuchtungsvorrichtung (10) dazu eingerichtet ist, dass das hochauflösende Lichtmodul (HDL) in dem Betriebsmodus der vorgegebenen Lichtfunktion, zumindest anteilig, eine Kompensationslichtverteilung erzeugt, mittels welcher eine in der Gesamtlichtverteilung (GL) vorliegende Inhomogenität (40), welche sich aus der Überlagerung dieser Teillichtverteilungen ergibt, reduziert und/oder kompensiert wird, und dass die Beleuchtungsvorrichtung (10) dazu eingerichtet, geeignet und/oder bestimmt ist, in Abhängigkeit wenigstens eines Lagewerts, welcher für eine relative Anordnung der Teillichtverteilungen (TL1, TL2) bezüglich einander charakteristisch ist, ein Kompensationsmuster auszuwählen und/oder zu ermitteln, welches für die zu erzeugende Kompensationslichtverteilung (KL) charakteristisch ist.

10. Beleuchtungsvorrichtung (10) nach dem vorangegangenen Anspruch,
**dadurch gekennzeichnet, dass**
die Beleuchtungseinrichtung (11) ein Matrix-Modul (14), insbesondere ein LED-Matrix-Modul, zur Erzeugung der ersten Teillichtverteilung (TL2) und der weiteren Teillichtverteilung (TL3) aufweist.

11. Beleuchtungsvorrichtung (10) nach einem der vorangegangenen Ansprüche,
**dadurch gekennzeichnet, dass**
die Beleuchtungseinrichtung (11) wenigstens zwei, insbesondere voneinander verschiedene, Lichtmodule (14, 16) zur jeweiligen Erzeugung einer Teillichtverteilung (TL1, TL2) aufweist, wobei es sich bevorzugt um ein Matrix-Modul (14) und ein Vorfeld-Modul (16) handelt.

12. Beleuchtungsvorrichtung (10) nach dem vorangegangenen Anspruch,
**dadurch gekennzeichnet, dass**
die Beleuchtungsvorrichtung (10) eine Speichereinrichtung (20) aufweist, in welcher wenigstens eine Kennlinie abgelegt ist, mithilfe derer, bevorzugt in Abhängigkeit der relativen Anordnung der Lichtmodule (14, 16) bezüglich einander, ein Kompensationsmuster auswählbar und/oder ermittelbar ist, welches für die zu erzeugende Kompensationslichtverteilung (KL) charakteristisch ist.

13. Beleuchtungsvorrichtung (10) nach dem vorangegangenen Anspruch,
**dadurch gekennzeichnet, dass**
als Kennlinie eine Verschiebungskennlinie abgelegt ist, anhand welcher in Abhängigkeit eines, bevorzugt gemessenem und/oder übermitteltem, Schwenk- und/oder Neigungswinkel ein hieran angepasstes Kompensationsmuster generierbar ist.

14. Beleuchtungsvorrichtung (10) nach einem der vorhergehenden Ansprüche 9 - 13,
**dadurch gekennzeichnet, dass**
die Beleuchtungsvorrichtung (10) eine Kalibriereinrichtung zur Kalibrierung und/oder Einstellung aufweist, mittels welcher eine relative Lage der Field-of-Views der Beleuchtungseinrichtung und des hochauflösenden Moduls einstellbar ist.

15. Straßenfahrzeug (1), insbesondere Kraftfahrzeug, mit wenigstens einer Beleuchtungsvorrichtung (10) gemäß einem der vorhergehenden Ansprüche 9-14 und bevorzugt mit wenigstens zwei Beleuchtungsvorrichtungen (10) gemäß einem der vorhergehenden Ansprüche 9-14.

## Claims

1. Method for operating an illumination device (10), in particular a headlight, for a road vehicle (1), which illumination device, in an operating mode of a predetermined light function, generates and/or emits, by means of an illumination apparatus (11), a total light distribution (GL) consisting of a first partial light distribution (TL1) and at least one further partial light distribution (TL2, TL3), and which illumination device can generate a high-resolution light distribution (HDL) by means of a high-resolution light module (12),
**characterized in that**
in the operating mode of the predetermined light function, the high-resolution light module (12) generates a high-resolution light distribution (HDL) which at least in part has a compensation light distribution (KL), by means of which an inhomogeneity (40) present in the total light distribution (GL), which inhomogeneity results from the superposition of these partial light distributions, is reduced and/or compensated for, a compensation pattern, which is characteristic of the compensation light distribution (KL) to be generated, being selected and/or ascertained depending on at least one position value which is characteristic of a relative arrangement of the partial light distributions (TL1, TL2) with respect to one another.

2. Method according to claim 1,
**characterized in that**
the compensation light distribution (KL) is provided in a transition region between two regions of the total light distribution (GL) that have different brightnesses, and in particular are adjacent.

3. Method according to any of the preceding claims,
**characterized in that**
the high-resolution light distribution (HDL) has, in addition to the compensation light distribution (KL), a further part which serves to fulfil a further light function.

4. Method according to claim 1,
**characterized in that**
the compensation pattern is determined/ascertained iteratively depending on the position value, the position value preferably being ascertained from an optically captured arrangement of the partial light distributions (TL1, TL2) with respect to one another.

5. Method according to any of the preceding claims,
**characterized in that**
when generating the compensation light distribution (KL), headlight range control of the illumination device (10) and/or a swivel and/or tilt movement is taken into account.

6. Method according to any of the preceding claims,
**characterized in that**
the illumination device (10) is calibrated by means of a real-time calibration method in which at least one calibration step takes place during the activated operating mode of the illumination device (10).

7. Method according to any of the preceding claims,
**characterized in that**
a compensation pattern is ascertained and/or modified at least temporarily during the activated operating mode of the illumination device (10).

8. Method according to any of the preceding claims,
**characterized in that**
in a calibration step, the operating mode of the predetermined light function of the illumination device is activated, and the illumination apparatus generates the at least first partial light distribution and the at least one further partial light distribution, and the total light distribution formed from the superposition of these partial light distributions is imaged and/or projected onto a roadway and/or projection surface, the illuminated region of the roadway and/or of the projection surface preferably being captured by means of an image capture apparatus in a further calibration step.

9. Illumination device (10), in particular a headlight, for a road vehicle (1), comprising an illumination apparatus (11) which illumination device is configured, in an operating mode of a predetermined light function, for generating and/or emitting a total light distribution (GL) consisting of a superposition of a first partial light distribution (TL1) and of at least one further partial light distribution (TL2, TL3), and further comprising a high-resolution light module (12) for generating a high-resolution light distribution (HDL),
**characterized in that**
the illumination device (10) is configured such that the high-resolution light module (HDL), in the operating mode of the predetermined light function, generates, at least in part, a compensation light distribution by means of which an inhomogeneity (40) present in the total light distribution (GL), which inhomogeneity results from the superposition of these partial light distributions, is reduced and/or compensated for, and **in that** the illumination device (10) is configured, suitable and/or intended to select and/or ascertain, depending on at least one position value which is characteristic of a relative arrangement of the partial light distributions (TL1, TL2) with respect to one another, a compensation pattern which is characteristic of the compensation light distribution (KL) to be generated.

10. Illumination device (10) according to the preceding claim,
**characterized in that**
the illumination apparatus (11) has a matrix module (14), in particular an LED matrix module, for generating the first partial light distribution (TL2) and the further partial light distribution (TL3).

11. Illumination device (10) according to any of the preceding claims,
**characterized in that**
the illumination apparatus (11) has at least two, in particular different, light modules (14, 16) for respectively generating a partial light distribution (TL1, TL2), which are preferably a matrix module (14) and a forefield module (16).

12. Illumination device (10) according to the preceding claim,
**characterized in that**
the illumination device (10) has a memory apparatus (20) in which at least one characteristic curve is stored, with the aid of which characteristic curve a compensation pattern, which is characteristic of the compensation light distribution (KL) to be generated, can be selected and/or ascertained, preferably depending on the relative arrangement of the light modules (14, 16) with respect to one another.

13. Illumination device (10) according to the preceding claim,
**characterized in that**
a displacement characteristic curve is stored as a characteristic curve, on the basis of which, and depending on a preferably measured and/or transmitted swivel and/or tilt angle, a compensation pattern adapted thereto can be generated.

14. Illumination device (10) according to any of the preceding claims 9-13,
**characterized in that**
the illumination device (10) has a calibration apparatus for calibration and/or adjustment, by means of which a relative position of the field of views of the illumination device and of the high-resolution module can be adjusted.

15. Road vehicle (1), in particular a motor vehicle, comprising at least one illumination device (10) according to any of the preceding claims 9-14 and preferably comprising at least two illumination devices (10) according to any of the preceding claims 9-14.

## Revendications

1. Procédé destiné au fonctionnement d'un dispositif d'éclairage (10), en particulier d'un phare, pour un véhicule routier (1), qui, dans un mode de fonctionnement d'une fonction lumineuse prédéfinie, produit et/ou émet, à l'aide d'un appareil d'éclairage (11), une répartition lumineuse globale (GL) constituée d'une première répartition lumineuse partielle (TL1) et d'au moins une autre répartition lumineuse partielle (TL2, TL3), et qui peut produire, à l'aide d'un module lumineux à haute résolution (12), une répartition lumineuse à haute résolution (HDL),
**caractérisé en ce que**
dans le mode de fonctionnement de la fonction lumineuse prédéfinie, le module lumineux à haute résolution (12) produit une répartition lumineuse à haute résolution (HDL) qui présente au moins en partie une répartition lumineuse de compensation (KL) à l'aide de laquelle une inhomogénéité (40) présente dans la répartition lumineuse globale (GL), qui résulte de la superposition de ces répartitions lumineuses partielles, est réduite et/ou compensée, dans lequel en fonction d'au moins une valeur de position qui est caractéristique d'un agencement relatif des répartitions lumineuses partielles (TL1, TL2) l'une par rapport à l'autre, un modèle de compensation qui est caractéristique de la répartition lumineuse de compensation (KL) à produire est sélectionné et/ou déterminé.

2. Procédé selon la revendication 1,
**caractérisé en ce que**
la répartition lumineuse de compensation (KL) est fournie dans une zone de transition entre deux zones de luminosité différente, en particulier voisines, de la répartition lumineuse globale (GL).

3. Procédé selon l'une des revendications précédentes,
**caractérisé en ce que**
la répartition lumineuse à haute résolution (HDL) présente, en plus de la répartition lumineuse de compensation (KL), une autre partie qui sert à réaliser une autre fonction lumineuse.

4. Procédé selon la revendication 1,
**caractérisé en ce que**
le modèle de compensation est constaté/déterminé de manière itérative en fonction de la valeur de position, dans lequel la valeur de position est de préférence déterminée à partir d'un agencement détecté optiquement des répartitions lumineuses partielles (TL1, TL2) l'une par rapport à l'autre.

5. Procédé selon l'une des revendications précédentes,
**caractérisé en ce que**
lors de la production de la répartition lumineuse de compensation (KL), il est tenu compte d'un réglage de la portée lumineuse du dispositif d'éclairage (10) et/ou d'un mouvement de pivotement et/ou d'inclinaison.

6. Procédé selon l'une des revendications précédentes,
**caractérisé en ce que**
le dispositif d'éclairage (10) est étalonné à l'aide d'une méthode d'étalonnage en temps réel, dans laquelle au moins une étape d'étalonnage est effectuée pendant le mode de fonctionnement activé du dispositif d'éclairage (10).

7. Procédé selon l'une des revendications précédentes,
**caractérisé en ce**
**qu**'au moins temporairement pendant le mode de fonctionnement activé du dispositif d'éclairage (10), un modèle de compensation est déterminé et/ou modifié.

8. Procédé selon l'une des revendications précédentes,
**caractérisé en ce que**
dans une étape d'étalonnage, le mode de fonctionnement de la fonction lumineuse prédéfinie du dispositif d'éclairage est activé et l'appareil d'éclairage produit l'au moins première répartition lumineuse partielle et l'au moins une autre répartition lumineuse partielle et la répartition lumineuse globale formée par la superposition de ces répartitions lumineuses partielles est reproduite et/ou projetée sur une voie de circulation et/ou une surface de projection, dans lequel la zone éclairée de la voie de circulation et/ou de la surface de projection est détectée de préférence à l'aide d'un appareil de détection d'images dans une autre étape d'étalonnage.

9. Dispositif d'éclairage (10), en particulier phare, pour un véhicule routier (1) comportant un appareil d'éclairage (11) qui, dans un mode de fonctionnement d'une fonction lumineuse prédéfinie, est conçu pour la production et/ou l'émission d'une répartition lumineuse globale (GL) à partir d'une superposition d'une première répartition lumineuse partielle (TL1) et d'au moins une autre répartition lumineuse partielle (TL2, TL3), et en outre comportant un module lumineux à haute résolution (12) pour la production d'une répartition lumineuse à haute résolution (HDL),
**caractérisé en ce que**
le dispositif d'éclairage (10) est conçu pour que le module lumineux à haute résolution (HDL) produit, dans le mode de fonctionnement de la fonction lumineuse prédéfinie, au moins en partie, une répartition lumineuse de compensation à l'aide de laquelle une inhomogénéité (40) présente dans la répartition lumineuse globale (GL), qui résulte de la superposition de ces répartitions lumineuses partielles, est réduite et/ou compensée, et **en ce que** le dispositif d'éclairage (10) est conçu, adapté et/ou destiné à sélectionner et/ou déterminer, en fonction d'au moins une valeur de position qui est caractéristique d'un agencement relatif des répartitions lumineuses partielles (TL1, TL2) l'une par rapport à l'autre, un modèle de compensation qui est caractéristique de la répartition lumineuse de compensation (KL) à produire.

10. Dispositif d'éclairage (10) selon la revendication précédente,
**caractérisé en ce que**
l'appareil d'éclairage (11) présente un module matriciel (14), en particulier un module matriciel à DEL, pour la production de la première répartition lumineuse partielle (TL2) et l'autre répartition lumineuse partielle (TL3).

11. Dispositif d'éclairage (10) selon l'une des revendications précédentes,
**caractérisé en ce que**
l'appareil d'éclairage (11) présente au moins deux modules lumineux (14, 16), en particulier différents l'un de l'autre, pour la production respective d'une répartition lumineuse partielle (TL1, TL2), dans lequel il s'agit de préférence d'un module matriciel (14) et d'un module d'aire de mouvement (16).

12. Dispositif d'éclairage (10) selon la revendication précédente,
**caractérisé en ce que**
le dispositif d'éclairage (10) présente un appareil de mémoire (20) dans lequel est enregistrée au moins une courbe caractéristique à l'aide de laquelle, de préférence en fonction de l'agencement relatif des modules lumineux (14, 16) l'un par rapport à l'autre, un modèle de compensation peut être sélectionné et/ou déterminé, lequel est caractéristique de la répartition lumineuse de compensation (KL) à produire.

13. Dispositif d'éclairage (10) selon la revendication précédente,
**caractérisé en ce**
**qu**'une caractéristique de déplacement est enregistrée comme courbe caractéristique, à l'aide de laquelle, en fonction d'un angle de pivotement et/ou d'inclinaison, de préférence mesuré et/ou transmis, un modèle de compensation adapté à celui-ci peut être généré.

14. Dispositif d'éclairage (10) selon l'une des revendications précédentes 9 à 13,
**caractérisé en ce que**
le dispositif d'éclairage (10) présente un appareil d'étalonnage pour l'étalonnage et/ou le réglage, à l'aide duquel une position relative des champs de vision de l'appareil d'éclairage et du module à haute résolution peut être réglée.

15. Véhicule routier (1), en particulier véhicule automobile, comportant au moins un dispositif d'éclairage (10) selon l'une des revendications précédentes 9 à 14 et, de préférence, comportant au moins deux dispositifs d'éclairage (10) selon l'une des revendications précédentes 9 à 14.
